# DEMANDE DE BREVET EUROPEEN

(11) **EP 4 184 256 A1**
(43) Date de publication de la demande: **24.05.2023**
(21) Numéro de dépôt: 22191469.0
(22) Date de dépôt: 22.08.2022
(51) Int. Cl.: G04B 45/00, G04B 19/12, G04B 39/00, G02F 1/00, G02F 1/01, G02B 5/28

(54) **BOITE DE MONTRE COMPRENANT UN COMPOSANT D'HABILLAGE SUR LEQUEL EST DÉPOSÉ UN EMPILEMENT DE COUCHES MINCES**

(30) Priorité: 23.11.2021 EP 21209841
(71) Demandeur: The Swatch Group Research and Development Ltd, 2074 Marin (CH)
(72) Inventeur: CURCHOD, Loïc, 1004 Lausanne (CH); SAGARDOYBURU, Michel, 2000 Neuchâtel (CH); SPRINGER, Simon, 3007 Berne (CH)
(74) Mandataire: ICB SA

(57) **Abrégé**

L'invention concerne une boite de montre (10) comprenant une carrure (11) à laquelle est fixée une glace (12) et un fond (13) de sorte à former un volume interne, ladite boite de montre (10) comportant, dans ledit volume interne, un composant d'habillage (14) sur lequel est déposé un empilement de couches (15) minces comprenant une couche de substrat (150), une couche à commutation de phase (151) à l'état solide interposée entre une couche d'encapsulation (152) transparente et une couche d'espacement (153) séparant ladite couche à commutation de phase (151) de la couche de substrat (150), la couche à commutation de phase (151) étant configurée de sorte à présenter un indice de réfraction apte à varier sous l'exposition de rayons lumineux de sorte à conférer à l'empilement de couches minces (15) au moins deux couleurs interférentielles.

## Description

### Domaine technique de l'invention

L'invention relève du domaine de l'horlogerie, et concerne plus particulièrement une boite de montre comportant un composant d'habillage sur lequel est déposé un empilement de couches minces.

### Arrière-plan technologique

Les couches minces sont couramment utilisées dans le domaine de l'horlogerie pour modifier les propriétés de surface des composants horlogers. Elles sont en particulier utilisées à des fins décoratives.

Plusieurs méthodes peuvent être mises en œuvre pour déposer des couches minces : le dépôt physique en phase vapeur, connu sous le sigle « PVD » pour « physical vapor déposition » en langue anglaise, le dépôt chimique en phase vapeur, connu sous le sigle « CVD » pour « chemical vapor déposition », la déposition de couches atomiques, connue sous le sigle « ALD » pour « Atomic Layer Déposition », ou la croissance galvanique.

Les couches minces peuvent être réalisées en métal pur, en alliages de métaux, ou en matériaux céramiques.

Néanmoins, ces couches minces proposent une gamme de couleurs intrinsèques relativement limitée selon leur composition et leur épaisseur. Par ailleurs, ces couches sont plus ou moins translucides selon leur composition et leur épaisseur, et leur couleur est peu saturée.

Une plus grande gamme de couleurs et des couleurs plus saturées peuvent être obtenues grâce aux couleurs interférentielles obtenues par l'empilement de différentes couches minces, typiquement réalisées en matériau diélectrique semi-transparent, déposées sur une couche réfléchissante formée par un miroir métallique.

Néanmoins, la couleur de ces empilements dépend fortement de l'épaisseur optique des couches minces, qui est typiquement de l'ordre du quart des longueurs d'onde du spectre visible, ce qui demande un contrôle précis de l'épaisseur du dépôt et limite leur application à des substrats sous forme plane, c'est-à-dire en deux dimensions. Aussi, la couleur de ces couches minces perçue par un utilisateur varie fortement en fonction de son angle de vue car la longueur du chemin optique change, ce qui représente un inconvénient majeur pour certaines applications esthétiques.

Toutes les couches minces précitées sont monochromes et un décor multicolore exige autant d'étapes de dépôts que de couleurs désirées, lesdites étapes de dépôt étant suivies d'étapes de structuration intermédiaires typiquement effectuées par photolithographie et gravure chimique, procédé dit « lift-off », « shadow mask », ou ablation par laser.

Ces étapes de structuration se révèlent souvent fastidieuses et onéreuses afin de respecter les exigences de tolérances. Par ailleurs, elles sont salissantes, notamment du fait qu'elles utilisent des bains chimiques ou qu'elles produisent des gaz, poussières et autres résidus. Les étapes de structuration sont donc suivies d'une étape de lavage avant l'assemblage, dans la montre, du composant réalisé.

Il existe, par conséquent, un besoin de fournir un composant présentant des couleurs vives et saturées sur une large gamme de couleurs, dont l'aspect n'est pas ou est peu dépendant de l'angle de vue sur le composant, et dont la structuration de ces couleurs n'est pas salissante ni susceptible de dégager des gaz, poussières ou autres résidus.

### Résumé de l'invention

La présente invention concerne une boite de montre comprenant une carrure à laquelle est fixée une glace et un fond de sorte à former un volume interne, ladite boite comportant, dans ledit volume interne, un composant d'habillage sur lequel est déposé un empilement de couches minces.

L'empilement de couches minces comprend une couche de substrat, une couche à commutation de phase à l'état solide interposée entre une couche d'encapsulation transparente et une couche d'espacement séparant ladite couche à commutation de phase de la couche de substrat.

Grâce à l'arrangement particulier de l'empilement de couches minces, le composant d'habillage présente des propriétés optiques produisant des couleurs interférentielles.

On appelle dans le présent texte « couleur interférentielle » une couleur générée par un phénomène optique d'interférence.

La couche à commutation de phase est configurée de sorte à présenter un changement de phase cristallographique par effet thermique, notamment sous l'exposition de rayons lumineux absorbés localement. Le changement de phase cristallographique de la couche à commutation de phase implique un changement de son indice de réfraction de sorte à conférer à l'empilement de couches minces au moins deux couleurs interférentielles différentes entre les zones exposées aux rayons lumineux et les zones non-exposées aux rayons lumineux.

Ainsi, une large gamme de couleurs saturées et intenses peut être générée, notamment en variant les épaisseurs de la couche à commutation de phase et de la couche d'espacement, et une décoration multicolore du composant d'habillage peut être obtenue.

Il y a lieu de noter que les rayons lumineux passent à travers la glace ou le fond si ce dernier comporte une glace, et selon où le composant d'habillage est disposé.

La commutation de phase ne produisant aucun dégagement gazeux, solide ou liquide, la réalisation des au moins deux couleurs interférentielles, et par conséquent la décoration du composant d'habillage, ne nécessite aucune opération ultérieure de nettoyage.

Ainsi, il est possible de décorer le composant d'habillage en fin de production de la boite de montre, au moment de la vente de la boite de montre, ou dans une période après-vente. Cet aspect autorise toute personnalisation de la décoration du composant d'habillage.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la couche à commutation de phase est configurée pour présenter deux états de phase commutables de façon réversible, lesdits états de phase étant une phase cristalline et une phase amorphe.

La décoration du composant d'habillage est ainsi réversible.

Dans des modes particuliers de réalisation, la couche d'encapsulation est transparente à la longueur d'ondes des rayons lumineux sous l'exposition desquels l'indice de réfraction de la couche à commutation de phase est apte à varier.

Dans des modes particuliers de réalisation, la couche de substrat est réalisée en matériau transparent ou translucide.

Dans des modes particuliers de réalisation, l'empilement de couches minces est déposé sur un support constitué par tout ou partie du composant d'habillage, la couche de substrat ou la couche d'encapsulation étant formée par le support.

Dans des modes particuliers de réalisation, le composant d'habillage est un cadran, une structure d'un mouvement horloger, une glace, une aiguille, une applique, un logo, un disque ou une masse oscillante.

Un autre aspect de l'invention concerne un procédé de décoration du composant d'habillage d'une boite de montre telle que précédemment décrite, consistant à exposer l'empilement de couches minces à des rayons lumineux sur une zone d'exposition prédéfinie, de sorte à changer localement la phase de la couche à commutation de phase, et par conséquent son indice de réfraction, et par conséquent encore la couleur interférentielle de l'empilement dans ladite zone d'exposition, et à générer ainsi un motif bicolore sur ledit composant d'habillage.

Ainsi il est possible de réaliser un décor bicolore sur le composant d'habillage de la boite de montre lorsque celle-ci est assemblée, et donc de personnaliser la décoration du composant d'habillage à tout moment de la vie de ladite boite de montre.

Dans des modes de mise en œuvre de l'invention, les rayons lumineux sont générés par un faisceau laser piloté par une unité de commande, de sorte à maitriser l'élévation localisée de la température de la couche à commutation de phase, le temps d'exposition et la forme de la zone d'exposition prédéfinie

Grâce à cette caractéristique, les motifs peuvent être générés de façon très précise, de sorte à autoriser une très grande diversité de décors envisageables et à permettre une qualité de réalisation de ces décors importante.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement une vue en coupe d'une boite de montre selon la présente invention ;
- la figure 2 représente schématiquement une vue en coupe d'un composant d'habillage de la boite de montre de la figure 1 ;
- la figure 3 représente schématiquement une vue en coupe d'un composant d'habillage de la boite de montre de la figure 1 dans lequel le composant d'habillage forme un support constituant une couche d'encapsulation ;

- la figure 4 représente schématiquement une vue en coupe d'un composant d'habillage de la boite de montre de la figure 1 dans lequel le support constitue une couche de substrat ;
- la figure 5 représente schématiquement une vue en coupe d'un composant d'habillage de la boite de montre de la figure 4 selon encore un autre exemple de réalisation de l'invention dans lequel la couche de substrat est transparente ;
- la figure 6 représente schématiquement une vue en coupe d'un composant d'habillage de la boite de montre de la figure 3 selon encore un autre exemple de réalisation de l'invention dans lequel la couche de substrat est transparente.

### Description détaillée de l'invention

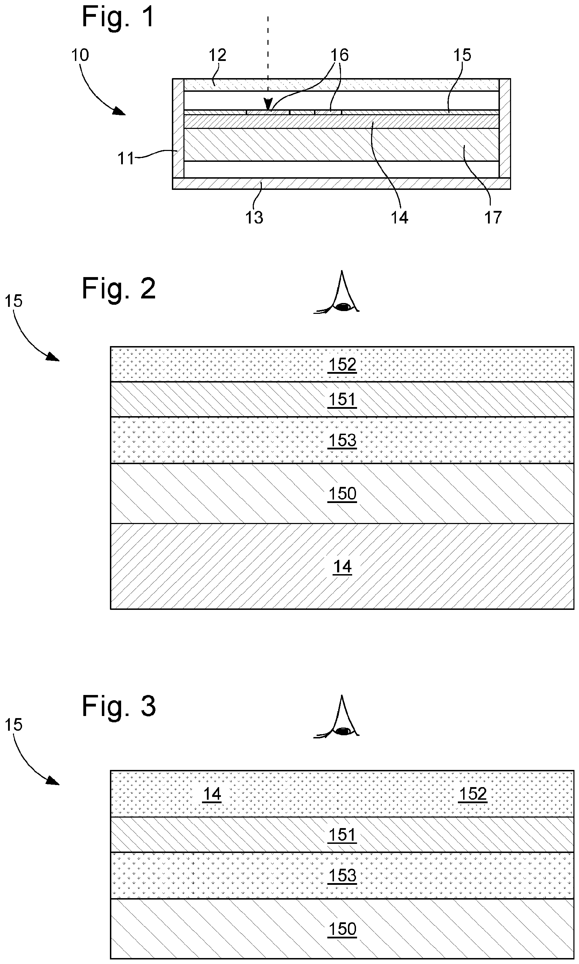

La figure 1 montre une représentation schématique d'une vue en coupe d'une boite de montre 10 selon la présente invention. La boite de montre 10 comporte une carrure 11 à laquelle est fixée une glace 12 et un fond 13 de sorte à former un volume interne.

La boite de montre 10 comporte, dans ledit volume interne, un composant d'habillage 14 sur lequel est déposé un empilement de couches minces 15. Autrement dit, l'empilement de couches minces 15 constitue un revêtement du composant d'habillage 14.

L'empilement de couches minces 15 est configuré de sorte à conférer au composant d'habillage 14, sur une surface de ce dernier destinée à être visible pour un utilisateur, plusieurs couleurs interférentielles prédéterminées comme décrit plus en détail ci-après.

Avantageusement, le composant d'habillage 14 peut être formé par un cadran, tel que visible sur la figure 1, par une structure d'un mouvement horloger 17, par exemple un pont ou une platine, par une masse oscillante, un réhaut, ou par tout autre composant logé dans le volume interne de la boite de montre 10 ou sur ladite boite de montre 10, tel que le fond 13, la glace 12, une lunette, etc.

Il y a lieu de noter que, dans le présent texte, le terme glace est employé par la suite pour désigner la glace 12 ou une éventuelle glace du fond 13.

L'empilement de couches minces 15 comporte une couche de substrat 150, une couche à commutation de phase 151 à l'état solide interposée entre une couche d'encapsulation 152 transparente et une couche d'espacement 153 séparant ladite couche à commutation de phase 151 de la couche de substrat 150.

Il y a lieu de noter que le terme « transparent » désigne dans le présent texte une capacité d'un matériau à laisser passer tout ou partie d'un rayonnement lumineux, notamment de la lumière visible à l'œil nu.

Les couleurs interférentielles sont générées par un effet d'interférence produit par l'agencement de la couche d'encapsulation 152, de la couche à commutation de phase 151, de la couche d'espacement 153 et de la couche de substrat 150, de façon réflective ou transmissive selon l'exemple de réalisation de la présente invention considéré.

Dans l'exemple de réalisation de l'invention représenté sur la figure 2, l'empilement de couches minces 15 peut être déposé sur un support, réalisé en tout matériau approprié, ledit support étant constitué par tout ou partie du composant d'habillage 14. Autrement dit, la couche de substrat 150 est agencée contre le support et sépare la couche d'espacement 153 du support.

Par exemple, le support peut être réalisé en matériau métallique, en silicium avec oxyde natif, en verre, en quartz, en saphir, en polyéthylène téréphtalate, par exemple sous la forme d'un film.

Dans l'exemple de réalisation représenté sur la figure 2, la couche de substrat 150 peut être formée par une couche réfléchissante, par exemple réalisée par un miroir métallique, préférentiellement réalisée dans un matériau présentant un facteur de réflexion important, par exemple le platine, le rhodium, l'argent, l'aluminium, etc. Cette couche peut présenter une épaisseur, définie ici comme étant la dimension selon la direction dans laquelle les couches minces sont superposées les unes aux autres, d'environ 100 nm.

La couche d'espacement 153 est réalisée en matériau diélectrique transparent. Un tel matériau peut être de l'oxyde d'étain-indium, du dioxyde de silicium ou du sulfure de zinc. Préférentiellement la couche d'espacement 153 présente une épaisseur comprise entre 50 nm et 200 nm.

La couche à commutation de phase 151 présente la capacité, du fait du matériau qui la constitue, de passer d'une phase cristalline ou amorphe à une phase respectivement amorphe ou cristalline, sous l'exposition de rayons lumineux adaptés.

De tels rayons lumineux sont représentés sur la figure 1 par la flèche en traits discontinus.

En particulier, la couche à commutation de phase 151 est configurée pour présenter deux états de phase commutables, préférentiellement de façon réversible. En d'autres termes, la couche à commutation de phase 151 est configurée pour pouvoir passer, suite à l'exposition aux rayons lumineux, d'une phase cristalline ou amorphe initiale à une phase respectivement amorphe ou cristalline finale, et revenir à sa phase initiale.

Plus précisément, l'exposition de l'empilement de couches minces 15 aux rayons lumineux génère localement une élévation localisée de température de la couche à commutation de phase 151. Une température située au-dessus du point de transition vitreuse appliquée pour un temps assez long, par exemple plusieurs secondes ou dizaines de secondes, induit une cristallisation de la couche à commutation de phase 151, c'est-à-dire un changement de la phase amorphe vers la phase cristalline, et une température située au-dessus du point de fusion appliquée pendant un temps suffisamment court pour figer la phase amorphe sans recristallisation induit une amorphisation de la couche à commutation de phase 151, c'est-à-dire un changement de la phase cristalline vers la phase amorphe.

A titre d'exemple préférentiel, la couche à commutation de phase 151 présente une phase amorphe après avoir été déposée, de sorte que la phase initiale est la phase amorphe.

La couche de commutation de phase 151 ne comporte pas le même indice de réfraction selon qu'elle présente une phase cristalline ou une phase amorphe. Ainsi, le changement de phase de la couche à commutation de phase 151 fait varier son indice de réfraction, et donc la perception de son aspect visuel pour un utilisateur dans la mesure où la couleur interférentielle de l'empilement est dépendante de l'indice de réfraction de la couche à commutation de phase 151.

Autrement dit, la couche à commutation de phase 151 est configurée de sorte que son indice de réfraction présente l'une ou l'autre de deux valeurs suite à l'exposition aux rayons lumineux. Il est à noter que les rayons lumineux sont générés de sorte à impacter localement l'empilement de couches minces 15 depuis la couche d'encapsulation 152 de sorte que le composant d'habillage présente deux couleurs interférentielles différentes.

Avantageusement, la couche à commutation de phase 151 est réalisée en matériau à changement de phase tel qu'en Ge2Sb2Te5 ou AgInSbTe. Préférentiellement, la couche à commutation de phase 151 présente une épaisseur comprise entre 5 nm et 20 nm.

Dans un procédé de décoration du composant d'habillage 14, les rayons lumineux sont appliqués localement sur une zone d'exposition prédéfinie 16 sur la surface de l'empilement de couches minces 15, de sorte à générer un motif prédéterminé sur le composant d'habillage 14. Un tel motif présente donc une couleur interférentielle différente de celle du reste du composant d'habillage et peut être de la forme d'un logo, d'un texte ou de toute autre représentation graphique.

Autrement dit, une portion de la couche à commutation de phase 151 présente une phase amorphe ou cristalline, le reste de ladite couche présentant une phase différente, et ainsi un indice de réfraction différent, ce qui permet la génération de deux couleurs interférentielles différentes.

Les rayons lumineux sont générés préférentiellement par un faisceau laser piloté par une unité de commande connue en soi de l'homme du métier, de sorte à maitriser au moins l'élévation localisée de la température de la couche à commutation de phase 151, le temps d'exposition et la forme de la zone d'exposition prédéfinie 16 sur la surface de l'empilement de couches minces 15.

Préférentiellement, le faisceau laser émet des rayons lumineux dont la longueur d'ondes est dans la gamme infrarouge, l'invention peut également être mise en œuvre avec des lasers dont le faisceau émet des rayons lumineux dont la longueur d'ondes est comprise dans la gamme visible ou dans la gamme ultraviolette. La puissance de travail du laser est relativement faible, préférentiellement autour de 50 mW avec une durée d'impulsion de l'ordre de 5 ms, c'est-à-dire une énergie d'impulsion de l'ordre de 250 µJ, afin d'effectuer la commutation de phase de la couche à commutation de phase 151 sans risquer de l'endommager par des effets de surchauffe, d'ablation, etc.

La couche d'encapsulation 152 permet de protéger l'empilement de couches minces 15 et en particulier la couche à commutation de phase 151 contre notamment l'oxygène et l'humidité. C'est à travers cette couche d'encapsulation 152 que la couche de commutation de phase 151 est visible pour un utilisateur.

Par ailleurs, la couche d'encapsulation 152 est transparente à la longueur d'ondes des rayons lumineux auxquels la couche à commutation de phase 151 est exposée.

La couche d'encapsulation 152 peut être notamment réalisée en oxyde d'étain-indium, en dioxyde de silicium ou en sulfure de zinc.

L'épaisseur et le matériau de la couche d'encapsulation 152 et de la couche d'espacement 153 sont choisis selon la couleur souhaitée de l'empilement de couches minces 15. En effet, l'épaisseur et le matériau des couches d'encapsulation 152 et d'espacement 153 font varier leur indice de réfraction respectif, et par conséquent, la couleur interférentielle.

Préférentiellement, la couche d'encapsulation 152 présente une épaisseur d'environ 10 nm.

L'empilement de couches minces 15 présente avantageusement une très faible épaisseur et par conséquent peut être appliqué sur le composant d'habillage 14 de la boite de montre 10 sans modifier la conception de ladite boite de montre 10 ou dudit composant d'habillage 14.

Avantageusement, dans un autre exemple de réalisation de la présente invention représenté sur la figure 3, la couche d'encapsulation 152 peut être formée par le support, qui est alors réalisé en matériau transparent.

La visualisation de l'empilement de couches minces 15, par un utilisateur, s'effectue alors depuis le support.

Le composant d'habillage 14 est dans ce cas par exemple constitué par une glace ou par un cadran réalisé en un matériau transparent. Avantageusement, l'empilement de couches minces 15 se trouve ainsi dans le volume interne de la boîte de montre 10 et n'est pas exposé à d'éventuels frottements.

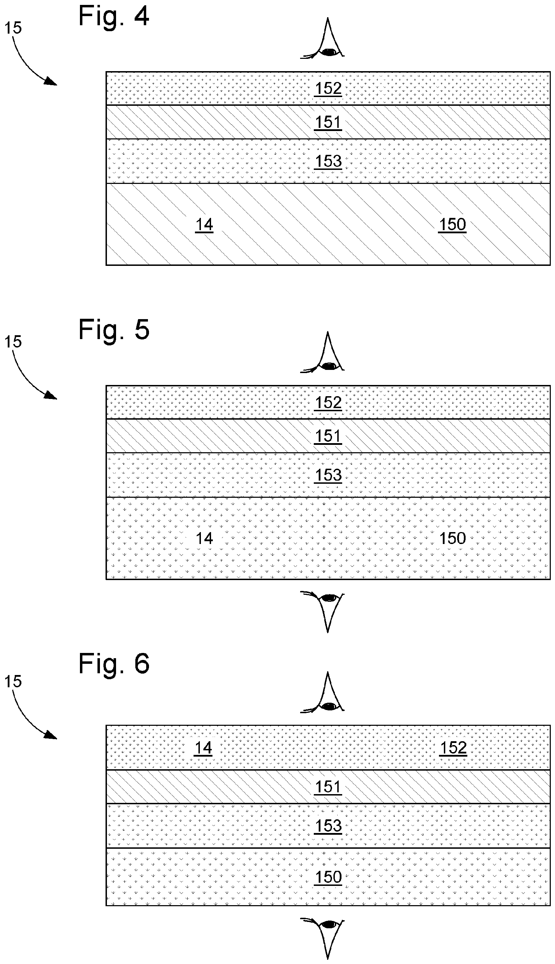

Avantageusement, dans un autre exemple de réalisation de la présente invention représenté sur la figure 4, la couche de substrat 150 peut être formée par le support, c'est-à-dire par le composant d'habillage 14, qui est alors réalisé en matériau réfléchissant, par exemple en platine, en rhodium, en argent, en aluminium, etc.

Dans les exemples de réalisation de la présente invention représentés sur les figures 2 et 3, puisque la couche de substrat 150 est formée par une couche réfléchissante, l'empilement de couches minces 15 est de nature à réfléchir la lumière à laquelle il est exposé, et à générer un aspect esthétique de couleurs interférentielles unies, opaques.

Dans encore d'autres exemples de réalisation de l'invention, représentés respectivement sur les figures 5 et 6, le substrat 150 n'est pas formé par une couche réfléchissante, contrairement aux exemples de réalisation décrits précédemment et illustrés sur les figures 2 à 4, mais est transparent ou translucide. Plus précisément, la couche de substrat 150 est formée par un matériau transparent ou translucide, tel que du polyéthylène téréphtalate, du verre, du saphir, etc.

Plus particulièrement, dans l'exemple de réalisation de l'invention visible sur la figure 5, la couche de substrat 150 est formée par le support, et dans l'exemple de réalisation de l'invention visible sur la figure 6, la couche d'encapsulation 152 est formée par le support.

Dans ces exemples de réalisation de l'invention, l'effet d'interférence produit par l'agencement de la couche à commutation de phase 151, de la couche d'espacement 153 et de la couche de substrat 150, est de type transmissif.

Dans les exemples de réalisation représentés sur les figures 5 et 6, le décor généré par l'empilement de couches minces 15 peut être observé par l'utilisateur à la fois à travers la couche d'encapsulation 152 et à travers la couche de substrat 150.

Dans ces exemples de réalisation de l'invention, le composant d'habillage 14 peut avantageusement être constitué par une glace ou un cadran.

De manière plus générale, il est à noter que les modes de mise en œuvre et de réalisation considérés ci-dessus ont été décrits à titre d'exemples non limitatifs, et que d'autres variantes sont par conséquent envisageables.

De manière générale, les différentes couches minces de l'empilement de couches minces 15 peuvent être déposées par une méthode de pulvérisation cathodique, ou par toute autre méthode de dépôt adaptée.

## Revendications

1. Boite de montre (10) **caractérisée en ce qu'**elle comprend une carrure (11) à laquelle est fixée une glace (12) et un fond (13) de sorte à former un volume interne, ladite boite de montre (10) comportant, dans ledit volume interne, un composant d'habillage (14) sur lequel est déposé un empilement de couches minces (15) comprenant une couche de substrat (150), une couche à commutation de phase (151) à l'état solide interposée entre une couche d'encapsulation (152) transparente et une couche d'espacement (153) séparant ladite couche à commutation de phase (151) de la couche de substrat (150), la couche à commutation de phase (151) étant configurée de sorte à présenter un indice de réfraction apte à varier sous l'exposition de rayons lumineux de sorte à conférer à l'empilement de couches minces (15) au moins deux couleurs interférentielles, ladite boite de montre (10) étant **caractérisé en ce que** la couche de substrat (150) est réalisée en matériau transparent ou translucide et **en ce que** l'empilement de couches minces (15) est déposé sur un support constitué par tout ou partie du composant d'habillage (14), la couche de substrat (150) ou la couche d'encapsulation (152) étant formée par le support.

2. Boite de montre (10) selon la revendication 1, dans laquelle la couche à commutation de phase (151) est configurée pour présenter deux états de phase commutables de façon réversible, lesdits états de phase étant une phase cristalline et une phase amorphe.

3. Boite de montre (10) selon l'une des revendications 1 à 2, dans laquelle la couche d'encapsulation (152) est transparente à la longueur d'ondes des rayons lumineux sous l'exposition desquels l'indice de réfraction de la couche à commutation de phase (151) est apte à varier.

4. Boite de montre (10) selon l'une des revendications 1 à 3, dans laquelle le composant d'habillage (14) est un cadran, une structure d'un mouvement horloger (17), une glace, un afficheur, une aiguille, une applique, un logo ou une masse oscillante.

5. Procédé de décoration du composant d'habillage (14) d'une boite de montre (10) selon l'une des revendications 1 à 4, consistant à exposer l'empilement de couches minces (15) à des rayons lumineux, sur une zone d'exposition prédéfinie (16), de sorte à changer localement la phase de la couche à commutation de phase (151) et à générer un motif sur ledit composant d'habillage (14).

6. Procédé de décoration selon la revendication 5, dans lequel les rayons lumineux sont générés par un faisceau laser piloté par une unité de commande, de sorte à maitriser l'élévation localisée de la température de la couche à commutation de phase (151), le temps d'exposition et la forme de la zone d'exposition prédéfinie (16).
